# EUROPÄISCHE PATENTSCHRIFT

(11) **EP 1 989 598 B1**
(45) Veröffentlichungstag und Bekanntmachung des Hinweises auf die Patenterteilung: **22.02.2012**
(21) Anmeldenummer: 06829543.5
(22) Anmeldetag: 13.12.2006
(51) Int. Cl.: G05B 19/042, H04L 12/40, H04L 12/42

(54) **VERFAHREN, KOMMUNIKATIONSNETZWERK UND STEUEREINHEIT ZUM ZYKLISCHEN ÜBERTRAGEN VON DATEN**
METHOD, COMMUNICATION NETWORK, AND CONTROL UNIT FOR THE CYCLICAL TRANSMISSION OF DATA
PROCEDE, RESEAU DE COMMUNICATION ET UNITE DE COMMANDE PERMETTANT UNE TRANSMISSION CYCLIQUE DE DONNEES

(30) Priorität: 15.12.2005 DE 102005060085
(43) Veröffentlichungstag der Anmeldung: 12.11.2008
(73) Patentinhaber: Beckhoff Automation GmbH, 33415 Verl (DE)
(72) Erfinder: JANSSEN, Dirk, 33415 Verl (DE); BECKHOFF, Hans, 33415 Verl (DE)
(74) Vertreter: Patentanwaltskanzlei WILHELM & BECK
(86) Internationale Anmeldenummer: PCT/EP2006/011964
(87) Internationale Veröffentlichungsnummer: WO 2007/073862

(56) Entgegenhaltungen:
- EP-A1- 0 847 165
- WO-A-03/054644
- WO-A-2005/066728
- DE-A1- 19 721 740

## Beschreibung

Die Erfindung betrifft ein Verfahren und ein Kommunikationsnetzwerk zum zyklischen Übertragen von Daten, insbesondere in Form von Ethernet-Telegrammen.

Das Ethernet ist die am weitesten verbreitete Technologie, mit der in lokalen Kommunikationsnetzen, sog. Local Area Networks (LAN) Daten aktuell mit einer Geschwindigkeit bis zu 100 Mio. Bits/s (Mbps) übertragen werden können. LANs sind lokale Kommunikationsnetzwerke, die auf ein geografisches Gebiet begrenzt sind und als Teilnehmer wenigstens eine Steuereinheit und mehrere Arbeitsstationen, auch Knoten genannt, aufweisen, die über eine Übertragungsstrecke, z.B. ein Koaxial-, Glasfaser- oder Twisted Pair-Kabel verbunden sind.

LANs werden mit einem Netzwerk-Betriebssystem und einem einheitlichen Netzwerk-Protokoll betrieben. Das Ethernet stellt ein mögliches Netzwerkprotokoll dar und unterstützt dabei die unterschiedlichsten Kommunikationsprotokolle, z.B. das TCP/IP-Protokoll oder das IPX-Protokoll. Im OSI-Schichtenmodell, dem internationalen Referenzmodell für Datenübertragung in Netzwerken, das aus einem Schichtenstapel aus sieben Schichten aufgebaut ist, wobei für jede Schicht eine Menge von Protokollen definiert ist, die jeweils der nächst höheren Schicht ihre Dienste zur Verfügung stellen, ist das Ethernet-Protokoll der zweiten Schicht, der sog. Leitungsschicht zugeordnet. In dieser Leitungsschicht werden die zu versendenden Daten zu Telegrammen gebündelt, denen spezifische Informationen für das jeweilige Kommunikationsprotokoll hinzugefügt werden. Die Leitungsschicht ist im Netzwerk für den Transport der Daten-Telegramme von Teilnehmer zu Teilnehmer und für die Fehlererkennung zuständig.

Beim Ethernet-Konzept ist die Leitungsschicht in zwei Ebenen unterteilt, wobei die erste Ebene den Daten einen Kopfabschnitt, einen sog. Startkennung hinzufügen, die Informationen enthält, die für eine korrekte Datenübertragung vom Empfängerprotokoll benötigt werden. In der zweiten Ebene des Ethernet-Protokolls wird dann das Telegramm mithilfe einer zusätzlichen Präambel und eines Endabschnitts, einer sog. Checksumme, für den Transport von Teilnehmer zu Teilnehmer eingekapselt. Mit solchen Ethernet-Telegrammen lassen sich Daten mit einer Länge von bis zu 1500 Bytes übertragen, wobei zwischen den einzelnen Ethernet-Telegrammen eine feste Pausenzeit einzuhalten ist.

Für das Versenden und das Empfangen der Ethernet-Telegramme auf der Ethernet-Übertragungsstrecke ist in der Regel ein Ethernet-Controller, auch als Media Access Controller (MAC) bezeichnet, zuständig, der zwischen der Steuereinheit und die Ethernet-Übertragungsstrecke geschaltet ist. Der MAC-Controller umfasst im Allgemeinen ein Sende- und ein Empfangsschieberegister, um die Ethernet-Übertragungsstrecke von dem physikalischen Speicher der Steuereinheit zu entkoppeln. Moderne Ethernet-Controller besitzen weiter in der Regel eine direkte Zugriffsmöglichkeit auf den physikalischen Speicher, einen sog. Direct Memory Access (DMA)-Modus, wodurch zeitsparend die zu sendenden und zu empfangenen Ethernet-Telegramme direkt im Speicher abgelegt bzw. aus diesem Speicher abgeholt werden können.

Ethernet-Protokolle werden vornehmlich bei Bürokommunikationsnetzwerken eingesetzt. Aufgrund der Vorteile des Ethernet-Konzepts bei der Nutzung von Standard-Hardware- und -softwarekomponenten sowie der Möglichkeit, bei einfacher Vernetzungstechnologie hohe Datenübertragungsraten zu erreichen, werden Ethernet-Kommunikationsnetzwerke zunehmend auch in der industriellen Fertigung zum Datenaustausch zwischen Arbeitsstationen einzusetzen. Beim Einsatz des Ethernet-Protokolls in der Automatisierungstechnik muss aber die Echtzeitfähigkeit der Ethernet-Datenübertragung sichergestellt werden. Bei der Steuerung von Maschinen ist es in der Regel erforderlich, dass eine zyklische Bearbeitung einer Steuerungsaufgabe im Wesentlichen ohne zeitliche Schwankungen, d.h. sog. Jitter erfolgt, wobei mit einer vorhersehbaren Antwortzeit auf die Regelanforderung reagiert wird.

Sollen z. B. im Rahmen einer auf dem Ethernet-Netzwerk laufenden Echtzeitanwendung zyklisch Ethernet-Telegramme versandt werden, um per Ethernet-Übertragungsstrecke angebundene Sensoren und Aktoren anzusprechen, übergibt die Steuereinheit in jedem Steuerungszyklus entsprechende Ethernet-Telegramme an seinen MAC-Controller zum Versenden. Dabei fügt die Steuereinheit vor der Übergabe an den MAC-Controller den zu versendenden Daten automatisch die in der Ethernet-Übertragungsnorm (IEEE 802.3) definierten Pausenzeiten, Startkennungen, Präambeln und Checksummen hinzu. Der MAC-Controller lädt dann, vorzugsweise mithilfe des DMA-Modus, die Ethernet-Telegramme in seinen Sendeschieberegister und beginnt ab einem bestimmten Füllstand des Sendeschieberegisters mit dem Versenden der Ethernet-Telegramme auf der Ethernet-Übertragungsstrecke.

Moderne Produktions- und Verarbeitungsprozesse zeichnen sich zunehmend durch schnelle Steuerungsaufgaben aus. Dies hat zur Folge, dass die Steuereinheit in dem bei der Industrieautomation eingesetzten Kommunikationsnetzwerk immer schneller auf Regelanforderungen reagieren muss. So werden Reaktionszeiten im Mikrosekundenbereich zur Steuerung technischer Prozesse zum Beispiel in der Kunststoffindustrie gefordert. Um solche schnellen Reaktionszeiten zu gewährleisten, ist bei der Steuereinheit in LAN-Netzwerken eine hochleistungsfähige Verarbeitungseinheit notwendig, um Zykluszeiten im Mikrosekundenbereich zu gewährleisten, was wiederum hohe Hardware-Kosten nach sich zieht.

Aus der DE 197 21 740 A1 ist ein Verfahren zum Übertragen von Daten auf eine Übertragungsstrecke, an der eine Steuereinheit und mehrere Knoten angeschlossen sind, bekannt, wobei die Steuereinheit zyklisch Daten in Form von Telegrammen auf die Übertragungsstrecke ausgibt und dabei den Sendevorgang steuert, um während des gesamten Sendezyklus unter Beachtung der Übertragungsnorm kontinuierlich Telegramme auszugeben. Die Knoten können beim Durchlauf Daten mit den Telegrammen austauschen, wobei die Steuereinheit in jedem Taktzyklus mindestens ein Kommunikationstelegramm versendet mit dem Knoten untereinander Daten austauschen können.

Aus der EP 847165 A1 ist weiter ein digitales Datenübertragungsnetz bekannt, bei dem eine Steuereinheit einen Hauptzyklus in mehrere Subzyklen unterteilt, um in jedem Subzyklus ein Telegramm zur Verarbeitung der nachgeordneten Knoten auszusenden, mit dem die Übertragungsparameter der Knoten im Datenübertragungsnetz für die verschiedenen Nutzkanäle festgelegt werden.

Aufgabe der vorliegenden Erfindung ist es, ein Verfahren zur Datenübertragung, ein Kommunikationsnetz und eine Steuereinheit für ein solches Kommunikationsnetz bereitzustellen, mit denen sich auf einfache und kostengünstige Weise zyklisch Daten mit hoher Frequenz unter den Teilnehmern am Datenverkehr verteilen lassen.

Diese Aufgabe wird erfindungsgemäß mit einem Verfahren gemäß Anspruch 1 und einem Kommunikationsnetzwerk gemäß Anspruch 9. Bevorzugte Weiterbildungen sind in den abhängigen Ansprüchen angegeben.

Erfindungsgemäß wird zum Übertragen von Daten auf einer Übertragungsstrecke, an der eine Steuereinheit und mehrere Knoten angeschlossen sind, von der Steuereinheit zyklisch Daten in Form von Telegrammen kontinuierlich während der gesamten Sendezykluszeiten unter Beachtung der Übertragungsnorm auf die Übertragungsstrecke ausgegeben, wobei die Knoten beim Durchlaufen der Telegramme Daten mit den Telegrammen austauschen. Die Steuereinheit unterteilt den Sendezyklus dabei in eine Anzahl von gleichlangen Subzyklen, wobei in jedem Subzyklus mindestens ein Kommunikationstelegramm versandt wird, in das eine erster Knoten beim Durchlauf Daten für einen zweiten an der Übertragungsstrecke nachgeordneten Knoten einschreiben kann.

Mit der erfindungsgemäßen Auslegung wird durch das kontinuierliche Versenden des Telegramms eine exakte Wiederholbarkeit des Sendevorgangs und damit ein jitterfreies Versenden der Telegramme gewährleistet. Durch die Unterteilung des Sendezyklus der Steuereinheit auf dem Kommunikationsnetz in gleichlange Subzyklen, die jeweils ein Kommunikationstelegramm enthalten, besteht die Möglichkeit, den Sendevorgang der Steuereinheit mit einer langsamen Taktrate und damit mit einer geringen Belastung zu betreiben und gleichzeitig in jedem Subzyklus Daten mit einer wesentlich höheren Frequenz zu verteilen, zum Beispiel um schnelle Regelvorgänge anzustoßen. Die Steuereinheit des Kommunikationssystems kann somit mit deutlich langsameren Takt betrieben werden als für die Echtzeitkommunikation benötigt wird, was die Steuereinheit entlastet. In der Steuereinheit können dann Ressourcen für weitere Aufgaben freigegeben werden, bzw. die Steuereinheit kann mit einer langsamen und damit kostengünstigen Hardware bestückt werden. Durch die Unterteilung des Sendezyklus der Steuereinheit in Subzyklen besteht ferner die Möglichkeit eine Kommunikation zwischen den der Steuereinheit nachgeschalteten Knoten innerhalb eines Sendezyklus auszuführen, wodurch auf einfache Weise eine dezentrale Steuerung erreicht wird.

Gemäß einer bevorzugten Ausführungsform wird das Kommunikationstelegramm von der Steuereinheit zu einem festen Zeitpunkt im Subzyklus verschickt. Diese Vorgehensweise gewährleistet, dass mit dem Kommunikationstelegramm Echtzeitdaten auf die Knoten übertragen werden können und somit schnelle Regelungsvorgänge möglich sind.

Gemäß einer weiteren bevorzugten Ausführungsform wird zum kontinuierlichen Senden der Telegramme bei einer vorgegebenen Sendezykluszeit die Anzahl und/oder die Länge der in dem Subzyklus zu versendenden Telegramme einschließlich des Kommunikationstelegramms von der Steuereinheit angepasst, um während der vorgegebenen Subzykluszeit kontinuierlich Telegramme auf die Übertragungsstrecke auszugeben. Diese Vorgehensweise ermöglicht es auf einfache Weise, kontinuierlich Telegramme im Rahmen eines Subzyklus bei gleichzeitiger optimaler Nutzung der im Subzyklus verfügbaren Sendezeit auszuführen.

Gemäß einer weiteren bevorzugten Ausführungsform ist im ersten Knoten ein erster Registerdatensatz vorgesehen, der eine Kennung eines Datenbereichs in dem auf der Übertragungsstrecke übertragenen Kommunikationstelegramm, eine Kennung eines zugeordneten Speicherbereichs im ersten Knoten und einen Schreibbefehl enthält, und ist im zweiten Knoten ein zweiter Registerdatensatz vorgesehen, der eine Kennung des Datenbereichs in dem auf der Übertragungsstrecke übertragenen Kommunikationstelegramm, eine Kennung eines zugeordneten Speicherbereichs in dem zweiten Knoten und einen Lesebefehl enthält, wobei der erste Knoten und der zweite Knoten jeweils einen Vergleich der auf der Übertragungsstrecke durchlaufenden Telegramme mit dem zugehörigen Registerdatensatz ausführen und auf der Grundlage des Vergleichsergebnisses eine Datenübertragung zwischen dem ersten und dem zweiten Knoten über das von der Steuereinheit ausgegebene Kommunikationstelegramm stattfindet. Mit dieser Auslegung wird auf einfache Weise eine Datenkommunikation zwischen beliebig nacheinander an der Übertragungsstrecke angeordneten Knoten ermöglicht, da die Knoten im Durchlauf durch Vergleich mit dem vorgegebenen Registerdatensatz die gewünschten Nutzdaten in das Kommunikationstelegramm einschreiben bzw. aus dem Kommunikationstelegramm auslesen können.

Bevorzugt ist dabei weiterhin, dass der Registerdatensatz eine Startadresse der Daten im Kommunikationstelegramm, eine Endadresse der Daten oder eine Länge eines Datenbereichs im Kommunikationstelegramm, eine Startadresse der zugeordneten Daten im Knoten und eine Kennzeichnung der Datenübertragung als Schreib- und Lesevorgang enthält. Diese Vorgehensweise ermöglicht eine schnelle Interpretation des Kommunikationstelegramms im Durchlauf und damit eine schnelle Datenverarbeitung. Der Registerdatensatz wird bevorzugt im Knoten während einer Hochlaufphase des Kommunikationsnetzwerkes erzeugt, wodurch eine hohe Flexibilität im Kommunikationsnetz gewährleistet wird und sich das Kommunikationsnetzwerk auf einfache Weise an die gewünschten Regelanforderungen anpassen kann.

Weiterhin ist es bevorzugt, um schnelle Steuerungsvorgänge, insbesondere Schaltvorgänge mit den in den Subzyklen des Sendezyklus übertragenen Kommunikationstelegrammen auslösen zu können, im Datenbereich des Kommunikationstelegramms ein Steuerdatum vorzusehen, dass vom ersten Knoten beim Durchlaufen des Kommunikationstelegramms eingeschrieben werden kann, wobei der zweite an der Übertragungsstrecke nachgeordnete Knoten das Steuerdatum dann ausliest und mit einem vorgegebenen Datum vergleicht, um bei Eintritt eines bestimmten Vergleichsergebnis einen Steuervorgang auszuführen. Mit dieser Vorgehensweise lassen sich auf einfache Weise mithilfe einer Inter-Knoten-Kommunikation schnelle Regelungen, zum Beispiel in der Kunststoffindustrie durchführen.

Die Erfindung wird anhand der beigefügten Zeichnungen näher erläutert.

Es zeigen:
Fig. 1A ein erfindungsgemäßes Kommunikationsnetzwerk;
Fig. 1B eine erfindungsgemäße Auslegung einer Steuereinheit im Kommunikationsnetzwerk;
Fig. 1C eine erfindungsgemäße Auslegung eines Knotens im Kommunikationsnetzwerk;
Fig. 2A ein Kommunikationstelegramm;
Fig. 2B einen erfindungsgemäßen Sendevorgang;
Fig. 3A ein Ablaufdiagramm in einem erfindungsgemäßen Knoten bei einem Lesevorgang; und
Fig. 3B ein Ablaufdiagramm in einem erfindungsgemäßen Knoten bei einem Schreibvorgang.

Mit lokalen Kommunikationsnetzen (LANs) lassen sich auf einfache Weise Daten und Ressourcen zwischen Teilnehmern, im allgemeinen Computer und Maschinen gemeinsam nutzen. Das Ethernet-Konzept ist dabei der am weitesten verbreitete Kommunikationsstandard im LAN. Die Erfindung wird anhand eines Ethernet-Kommunikationsnetzwerkes erläutert. Es besteht jedoch die Möglichkeit, ein beliebiges LAN-Kommunikationsnetzwerk in der erfindungsgemäßen Weise zu betreiben.

Das Ethernet-Kommunikationsnetzwerk basiert auf einem LAN-Aufbau, bei dem eine Mehrzahl von Teilnehmern über ein gemeinsame Übertragungsstrecke miteinander verbunden sind, wobei eine Verkapselung der zu übermittelnden Daten in Datenpaketen, im weiteren auch als Ethernet-Telegramme bezeichnet mit einem vorgegebenen Format vorgenommen wird. Das Ethernet besteht dabei aus drei Bereichen, nämlich der Übertragungsstrecke und den Netzwerkschnittstellen, der Menge an Protokollen, die den Zugriff auf die Ethernet-Übertragungsstrecke steuern, und dem Ethernet-Telegrammformat. Das Ethernet-Kommunikationsnetzwerk stellt dabei grundsätzlich ein Bussystem dar, wobei beliebige Netzwerktopologien z.B. Stern-, Bus- oder Baumnetze verwendet werden können.

Das Ethernet-Protokoll hat sich als Kommunikationsstandard für Netzwerksysteme nicht nur in der Bürokommunikation, sondern auch in der Industrieautomation durchgesetzt, da Standard-Hardwarekomponente und Standard-Softwareprotokolle genutzt werden können und darüber hinaus hohe Datenübertragungsraten möglich sind.

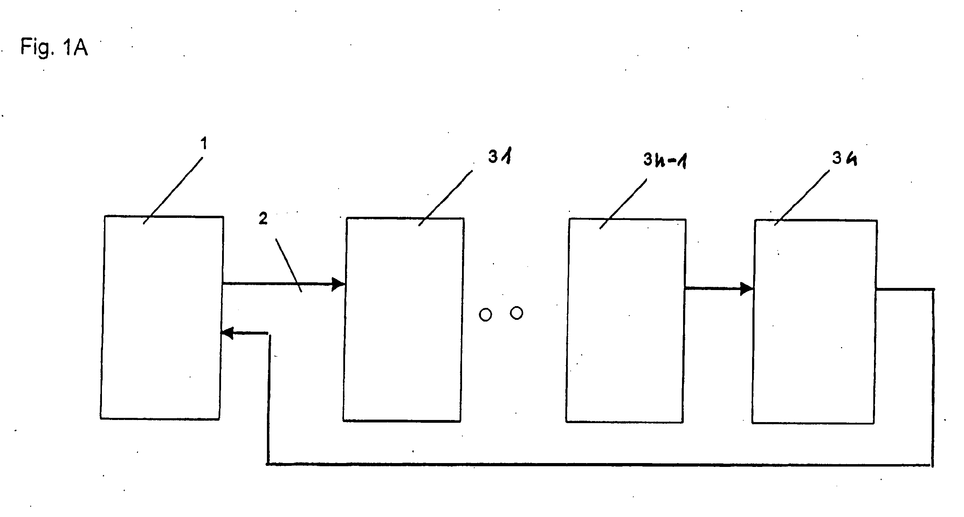

Fig. 1A zeigt schematisch ein Ethernet-Netzwerk, wie es in der Industrieautomation zur Durchführung von Steuerungsaufgaben eingesetzt wird. Das Ethernet-Netzwerk weist eine Ethernet-Übertragungsstrecke 2 auf, über die eine Steuereinheit 1 mit mehreren Knoten 3 (31,...3n) verbunden ist. Die Übertragungsstrecke 2 ist zum Beispiel eine elektrische Leitung, ein Lichtleiter oder ein Radiokabel. Die Steuereinheit 1 ist der aktive Teilnehmer am Kommunikationsnetzwerk, der den Datenverkehr bestimmt. Eine solche Steuereinheit 1 ist zum Beispiel ein Microcontroller, der als Prozessleitrechner in einem Fertigungsprozess dient. Die Steuereinheit 1 besitzt eine Netzzugriffsberechtigung und kann Telegramme auf die Übertragungsstrecke 2 ausgeben und über die Übertragungsstrecke 2 empfangen. Die Knoten 3 im Kommunikationsnetzwerk stellen die Maschinenperipheriegeräte wie z.B. E/A-Geräte, Ventile, Antriebe und Messumformer dar. Sie besitzen keine eigene Zugriffsberechtigung auf das Kommunikationsnetzwerk, d.h. sie dürfen keine eigenständigen Telegramme auf das Netz ausgeben, sondern nur einen Datenaustausch mit dem aus der Übertragungsstrecke 2 umlaufenden Telegrammen ausführen.

Bei dem in Fig. 1A gezeigten Ethernet-Netzwerk sind die Teilnehmer an der Übertragungsstrecke 2 zu einer Kette zusammengeschlossen, wobei jeder Knoten 3 mit zwei Nachbarn, der erste Knoten 31 und der letzte Knoten 3n mit der Steuereinheit 1 verbunden ist. Die Datenübertragung erfolgt dabei in eine Richtung ausgehend von der Steuereinheit 1 zum ersten Knoten 31 und von dort weiter bis zum letzten Knoten 3n und dann zurück zur Steuereinheit 1. Bei der in Fig. 1A gezeigten Ausführungsform werden die von der Steuereinheit 1 auf die Übertragungsstrecke 2 ausgegebenen Ethernet-Telegramme auf dem Hinweg von den Knoten 3 beim Durchlauf verarbeitet und dann vom letzten Knoten 3n gegebenenfalls durch alle vorangehenden Knoten ohne weitere Verarbeitung hindurch auf die Steuereinheit 1 rückgekoppelt.

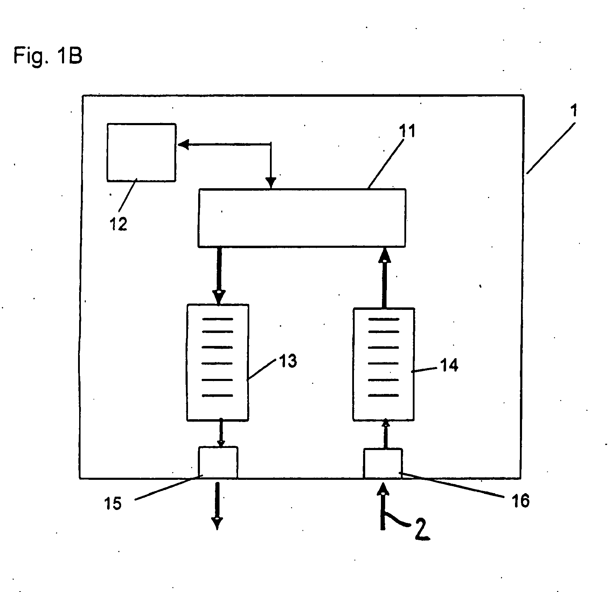

Fig. 1B zeigt eine erfindungsgemäße Steuereinheit 1 zur Anbindung an die Ethernet-Übertragungsstrecke 2. Für das Versenden der Ethernet-Telegramme auf der Übertragungsstrecke 2 ist eine Kodiereinheit 15 vorgesehen, für den Empfang der Ethernet-Telegramme von der Übertragungsstrecke 2 eine Dekodiereinheit 16. An die Kodiereinheit 15 bzw. die Dekodiereinheit 16 ist jeweils ein als Schieberegister ausgelegter Zwischenspeicher 13, 14 angeschlossen, um die zu versendenden bzw. empfangenen Ethernet-Telegramme zwischenzuspeichern. Die Kodiereinheit 15, die Dekodiereinheit 16 und die beiden Zwischenspeicher 13, 14 bilden den Media Acess Controller (MAC). Die Sende- und Empfangsschieberegister 13, 14 des MAC-Controllers sind vorzugsweise so ausgelegt, dass auf einen physikalischen Speicher 11 direkt mithilfe eines sogenannten Direct-Memory-Access (DMA)-Modus zugegriffen werden kann. Alternativ besteht die Möglichkeit, den Datenaustausch zwischen dem Sendeschieberegister 13 bzw. dem Empfangsschieberegister 14 und dem physikalischen Speicher 11 über eine zentrale Verarbeitungseinheit (CPU) 12 der Steuereinheit 1 erfolgen zu lassen. Der direkte Zugriff über den DMA-Modus sorgt jedoch für einen beschleunigten Datenaustausch.

Die Steuerung des Datenaustausches in der Steuereinheit 1 erfolgt über die CPU 12. Die CPU 12 verwaltet weiterhin auch alle zum Betrieb des Ethernet-Netzwerks notwendigen Vorgänge, d.h. führt das Management des Sende- und Empfangsvorgangs durch und sorgt für eine Verkapselung der zu versendenden Daten in Ethernet-Telegrammen bzw. das Entpacken der Daten aus den empfangenen Ethernet-Telegrammen. Das auf der CPU 12 der Steuereinheit 1 implementierte Betriebssystem weist in der Regel eine geschichtete Softwarestruktur auf, um eine protokollspezifische Bearbeitung von einer telegramm- und hard-warespezifischen Bearbeitung zu trennen. Dadurch ist es möglich, unterschiedliche Kommunikationsprotokolle im Rahmen des Ethernet-Standards einzusetzen, ohne am hardwarespezifischen Treiber Änderungen durchführen zu müssen. Gleichzeitig kann so auch die Hardware der Steuereinheit geändert werden ohne zusätzlich eine protokollspezifische Softwareänderung ausführen zu müssen.

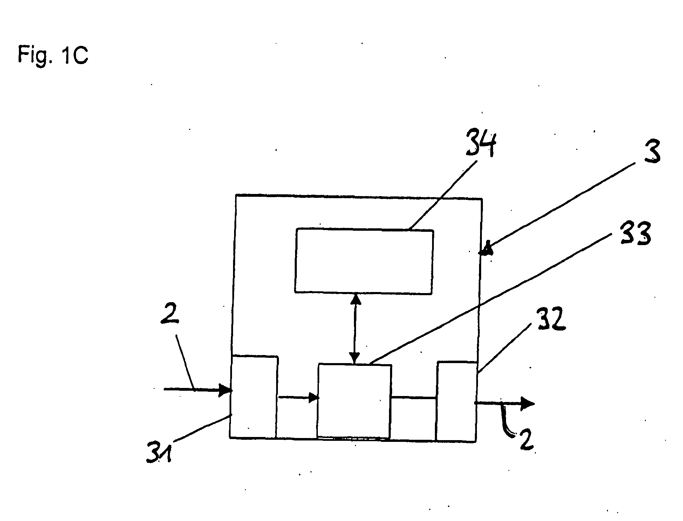

Fig. 1C zeigt den Aufbau eines Knoten 3 an der Ethernet-Übertragungsstrecke 2. Der Knoten 3 weist eine Empfangseinheit 31 und eine Sendeeinheit 32 auf, die zum Empfangen eines Ethernet-Telegramms bzw. zum Senden eines Ethernet-Telegramms auf der Ethernet-Übertragungsstrecke 2 dienen. Die Sendeeinheit 31 und die Empfangseinheit 32 sind mit einer Zuordnungseinheit 33 verbunden, die im weiteren als FFMU (Feldbus-Memory-Management-Unit) bezeichnet wird und in der der für den jeweiligen Knoten notwendige Teil des Busprotokolls implementiert ist. Die Zuordnungseinheit 33 steuert die Datenübergabe zwischen den auf der Übertragungsstrecke 2 durchlaufenden Telegrammen und in einem Datenspeicher 34 des Knotens 3 abgelegten Nutzdaten. Diese Nutzdaten können zum Beispiel Messdaten oder Steuerdaten zum Ausführen eines Fertigungsvorgangs sein.

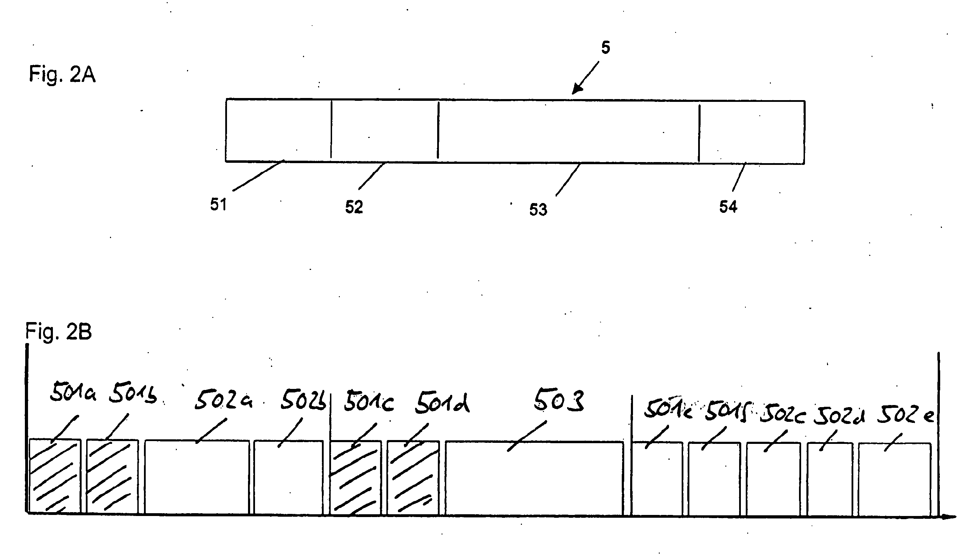

Fig. 2A zeigt schematisch ein auf der Übertragungsstrecke 2 umlaufendes Ethernet-Telegramm 5. Ein solches Telegramm kann bis zu 1500 Bytes enthalten und setzt sich aus einem Kopfteil mit einer Startkennung 51, einer Präambel 52, die die Ziel- und Qüelladresse und den Datenpakettyp kennzeichnet, einem Mittelteil 53 mit den Daten und einem eine Checksumme enthaltenen Endteil 34, das als Fehlererkennungsmechanismus dient, zusammen.

Beim Einsatz von LAN-Kommunikationsnetzwerken in der Industrieautomation ist es erforderlich, dass eine Echtzeitdaten-übertragung gewährleistet wird. Gleichzeitig ist es zur Ausführung schneller Steuerungsaufgaben mithilfe des verteilten LAN-Netzwerks erforderlich, dass die einzelnen Knoten, die die Maschinenperipherie darstellen, Daten mit Zykluszeiten im Mikrosekundenbereich weitgehend jitterfrei, d.h. ohne Abweichungen von der gewünschten Zykluszeit erhalten. Um solche schnellen Zykluszeiten jitterfrei zu gewährleisten und gleichzeitig die Steuereinheit des Kommunikationsnetzwerks zu entlasten bzw. zu ermöglichen, den Hardwareaufwand der Steuereinheit zu reduzieren, gibt die Steuereinheit 1 gemäß der Erfindung zyklisch Daten in Form von Telegrammen 5 kontinuierlich über die gesamte Sendezykluszeit unter Beachtung der Übertragungsnorm auf die Übertragungsstrecke 2 aus. Die Steuereinheit 1 unterteilt dabei den Sendezyklus in eine Anzahl von gleichlangen Subzyklen, wobei in jedem Subzyklus mindestens ein Kommunikationstelegramm versandt wird, in das ein erster Knoten 3 beim Durchlauf Daten für einen zweiten an der Übertragungsstrecke 2 nachgeordneten Knoten 3 einschreiben kann. Durch das kontinuierliche Senden der Telegramme im Sendezyklus der Steuereinheit 1 wird eine exakte Wiederholbarkeit des Sendevorgangs und damit ein jitterfreies Versenden der Telegramme gewährleistet. Durch die Unterteilung des Sendezyklus der Steuereinheit 1 in Subzyklen, die jeweils wenigstens ein Kommunikationstelegramm mit auf die einzelnen Knoten zu verteilende Daten enthält, über das die Knoten auch untereinander Daten austauschen können, besteht die Möglichkeit, die Steuereinheit mit einem langsamen Sendezyklustakt, der die Steuereinheit entlastet und keine aufwändige Hardware benötigt, zu betreiben, z.B. mit einem Sendezyklustakt im Millisekundenbereich, und gleichzeitig über die in den Subzyklen enthaltenen Kommunikationstelegramme unter Echtzeitbedingungen Steueraufgaben mit sehr schnellen Regelzeiten z.B. im Mikrosekundenbereich auszuführen.

Fig. 2B zeigt ein Beispiel für eine erfindungsgemäße Auslegung eines Sendezyklus einer Steuereinheit 1. Der Sendezyklus, der 0,6 msec beträgt, ist in drei Subzyklen à 200 µsec unterteilt. Pro Subzyklus sind dabei zwei Kommunikationstelegramme 501 mit unter den nachgeordneten Knoten zu verteilenden Daten vorgesehen. In die Kommunikationstelegramme 501 kann dann ein erster Knoten beim Durchlauf der Telegramme Daten für einen weiteren, an der Übertragungsstrecke 2 in der Übertragungsrichtung nachgeordneten Knoten einschreiben. Die beiden Kommunikationstelegramme 501 werden von der Steuereinheit zu einem fest definierten Zeitpunkt im Subzyklus, in der in Fig. 2B gezeigten Ausführungsform an erster und zweiter Stelle verschickt. Nach den beiden Kommunikationstelegrammen 501 können im Subzyklus dann weitere Telegramme 502 mit zusätzlichen Daten für die Knoten verschickt werden oder durch "leere" Telegramme 503, die nur als Platzhalter dienen, um den Sendezyklus aufzufüllen. Fig. 2B zeigt im ersten Subzyklus zwei zusätzliche Daten-Telegramme 502a, 502b, im zweiten Subzyklus ein Platzhalter-Telegramm 503 und im dritten Subzyklus drei weitere Datentelegramme 502c, 502d, 502e. Zwischen den einzelnen Telegrammen ist die gemäß dem Übergangs-Protokoll erforderliche Pausenzeit eingehalten.

Der Sendevorgang der Ethernet-Telegramme über die Übertragungsstrecke 2 wird von der Steuereinheit 1 so ausgeführt, dass der in der CPU 12 eingesetzte Softwaretreiber die zu versendenden Daten in die Ethernet-Telegramme umsetzt, die, wenn die Steuereinheit 3 im DMA-Modus arbeitet, im physikalischen Speicher 11 abgelegt werden. Auf diese abgespeicherten Ethernet-Telegramme greift dann das Sendeschieberegister 13 zu, um die Ethernet-Telegramme 5 in das Schieberegister zu laden. Bei der in Fig. 2B gezeigten Telegrammfolge werden zuerst die beiden Kommunikationstelegramme 501a, 501b des ersten Subzyklus, dann die beiden weiteren Daten-Telegramme 502a, 502b des ersten Subzyklus, anschließend die beiden Kommunikationstelegramme 501c, 501d und das Platzhalter-Telegramm 503 des zweiten Subzyklus, dann die beiden Kommunikationstelegramme 501e, 501f des dritten Subzyklus und schließlich die drei Daten-Telegramme 502c, 502d, 502e des dritten Subzyklus in das Sendeschieberegister 13 übergeführt. In gleicher Weise werden dann die Telegrammsätze weiterer Sendezyklen in das Sendeschieberegister 13 eingespeichert. Wenn unter Steuerung durch den Softwaretreiber der CPU 12 vom physikalischen Speicher 11 genügend Ethernet-Telegramme auf das Sendeschieberegister 13 übertragen wurden, um einen kontinuierlichen Sendevorgang auszuführen, gibt das Sendeschieberegister 13 die zwischengespeicherten Ethernet-Telegramme über die Kodiereinheit 15 auf die Ethernet-Übertragungsstrecke 2 aus. Eine Ethernet-Übertragung findet jedoch nur dann statt, wenn das Ethernet-Netzwerk ruhig ist. Darüber hinaus ist in der Regel zusätzlich ein Kollisionsverhinderungsmechanismus auf der Ethernet-Übertragungsstrecke 2 vorgesehen.

Wenn eine Steuereinheit 1 Sensoren oder Aktoren, die als weitere Knoten an die Ethernet-Übertragungsstrecke 2 angebunden sind, in Echtzeit steuern soll, ist ein jitterfreie Sendeabfolge der Ethernet-Telegramme 5 im Subzyklus erforderlich. Beim Senden von Ethernet-Telegrammen sind jedoch mehrere jitterbehaftete Vorgänge enthalten, deren Jitter sich im ungünstigsten Fall aufsummiert. Ein erster Jitter ergibt sich aus den schwankenden Interrupt-Latenzzeiten des Betriebssystems der Steuereinheit 1 und des Software-Treibers beim Umsetzen der Ethernet-Telegramme. Weiterhin treten Laufzeitschwankungen des bis zum Versenden des Ethernet-Telegrammen durchlaufenden Datencodes auf. Bei modernen Steuereinheiten, die über einen Cache-Speicher verfügen, schwanken zusätzlich auch die Laufzeiten ein und desselben durchlaufenden Datencodes, da je nach Cache-Inhalt unterschiedlich lange auf den angeforderten Speicher gewartet werden muss. Weitere Jitter ergeben sich zudem bei der Übergabe der Ethernet-Telegramme an das Sendeschieberegister 13.

Zur Kompensation des Jitter wird erfindungsgemäß die CPU 12 der Steuereinheit 1 so programmiert, dass ohne Pause Ethernet-Telegramme 5 aus dem Sendeschieberegister 13 versendet werden. Dabei wird das Sendeschieberegister 13 und die angeschlossene Kodiereinheit 15 so gesteuert, dass im Anschluss an ein gesendetes Ethernet-Telegramm direkt das nächste Ethernet-Telegramm unter Einhaltung der in der Ethernet-Übertragungsnorm definierten Pausezeit gesendet wird.

Um zu gewährleisten, dass bei einer durch die Regelzeit vorgegebenen Subzykluslänge kontinuierlich Ethernet-Telegramme versandt werden, berechnet die CPU 12, wie viele und wie lange Ethernet-Telegramme versandt werden müssen, um die vorgegebene Subzykluszeit exakt einzuhalten. Die CPU stellt die zu versendenden Daten 53 gemäß der Ethernet-Übertragungsnorm in entsprechend lange Ethernet-Telegramme 5 mit Startkennung 51, Präambel 52 und Checksumme 54 zusammen und legt sie im physikalischen Speicher 11 ab. Das Sendeschieberegister 13 greift dann auf diese Ethernet-Telegramme 5 zu und speichert sie zwischen. Ab einem gewissen Füllstand im Sendeschieberegister 13 wird dann mit dem Sendevorgang begonnen, wobei kontinuierlich Ethernet-Telegramme versendet werden, wie in Fig. 2B für einen gesamten Sendezyklus der Steuereinheit 1 gezeigt ist.

Mithilfe des Sendeschieberegisters 13 wird die Bereitstellung der Ethernet-Telegramme durch die CPU 12 im physikalischen Speicher 11 der Steuereinheit 1 vom Sendezeitpunkt der Ethernet-Telegramme entkoppelt, so dass ein möglicher Jitter ausgeglichen wird. Da das Timing des Sendevorgangs ausschließlich von der Steuereinheit 1 und der nachgeschalteten Über-tragungsphysik der Übertragungsstrecke 2 abhängt und aus dem Sendeschieberegister 13 Ethernet-Telegramme 5 kontinuierlich gesendet werden, ist eine exakte Wiederholbarkeit und damit ein jitterfreies Senden möglich.

Bei der Berechnung der Anzahl und der Länge in einem Sendezyklus zu versendenden Ethernet-Telegramme berücksichtigt die CPU 12 der Steuereinheit 1 sowohl die auf der Übertragungsstrecke 2 verwendete Baudrate als auch die bei der Verkapselung der zu versendenden Daten automatisch eingefügten zusätzlichen Daten, d.h. Startkennung 51, Präambel 52 und Checksumme 54, sowie die zwischen den Ethernet-Telegrammen einzuhaltenden Pausenzeiten. Diese zusätzlichen Signale sind in der Ethernet-Norm IEEE 802.3 festgelegt und betragen bei einem 100-Base-TX-Ethernet, also einem Fast-Ethernet mit 100 MBaud für die Startkennung 8 Bit, für die Präambel 56 Bit, für die Checksumme 32 Bit und die Pausenzeit 69 Bit.

Die von der Sendeeinheit 1 über die Kodiereinheit 15 ausgege-benen Telegramme werden von den über die Übertragungsstrecke 2 angeschlossenen Knoten 3 im Durchlauf interpretiert. Durch die Unterteilung des Sendezyklus in Subzyklen, die jeweils an einer festen Stelle, vorzugsweise in erster Position, Kommunikationstelegramme zur Steuerung von Echtzeitvorgängen enthalten, ist es möglich, aufgrund der höheren Frequenz der Subzyklen schnelle Regelvorgänge zu initiieren. Hierbei besteht die Möglichkeit, dass die Knoten 3 miteinander in einem Sendezyklus über die Kommunikationstelegramme in den Subzyklen miteinander kommunizieren bzw. die für die Regelvorgänge notwendigen Prozessdaten austauschen. Dies erfolgt in der Weise, dass ein vorausgehender Knoten in ein Kommunikationstelegramm beim Durchlauf Daten für einen nachgeordneten Knoten einschreibt, die dann im nachfolgenden Knoten ausgelesen werden und einen entsprechenden Regelvorgang auslöst. Der Datenaustausch zwischen den Knoten und den Kommunikationstelegrammen erfolgt dabei vorzugsweise in der nachfolgend dargestellten Weise.

Damit die FMMU-Einheit 33 des jeweiligen Knotens 3 die ihm zugeordneten Daten aus den Kommunikationstelegrammen 501 auf der Übertragungsstrecke 2 entnimmt bzw. in diese überträgt, enthält die FMMU-Einheit 33 eine Registereinheit 331 mit mehrere Registerdatensätze, die das durchlaufende Kommunikationstelegramm 501 mit dem Datenspeicher 34 im jeweiligen Knoten, der die zugehörigen Daten enthält, korrelieren. Jeder Registerdatensatz 331 umfasst dabei die folgende Register, die einen zusammenhängenden Speicherbereich im Kommunikationstelegramm 501 beschreiben: Startadresse des Datenbereichs im Kommunikationstelegramm; Endadresse des Datenbereichs im Kommunikationstelegramm; Startadresse des Datenbereichs im Datenspeicher 34 des Knotens 3; Art der Datenübertragung "Write" oder "Read".

Jeder Registerdatensatz 331 gibt also den Beginn der dem jeweiligen Knoten zugeordneten Daten im Kommunikationstelegramm 501 an. Durch das Festlegen des Datenendes im Registersatz ist dann die Länge der dem jeweiligen Knoten zugeordneten Daten im Kommunikationstelegramm 501 festgelegt. Statt einer Endadresse kann der Registerdatensatz 331 deshalb auch eine Information über die Länge des zugeordneten Datenbereichs im Kommunikationstelegramm 501 enthalten. Die im Registerdatensatz 331 enthaltene Information über den Beginn des Datensatzes im Datenspeicher 34 des Knotens sorgt für die Zuordnung der im Kommunikationstelegramme enthaltenen Daten zu den Daten im Knoten. Der Typ der Datenübertragung im Registersatz legt abschließend fest, ob ein Schreib- oder Lesevorgang zwischen Knoten und dem Kommunikationstelegramm vorgenommen werden soll.

Die Registerdatensätze 331 in den FMMU-Einheiten 33 der Knoten 3 werden in der Hochlaufphase erzeugt. Während des zyklischen Datenverkehrs auf der Übertragungsstrecke 2 werden dann jeweils die durchlaufenden Kommunikationstelegramme 501 mit den Registerdatensätzen 331 der FMMU-Einheit 33 von einer Vergleichseinheit 34 der FMMU-Einheit 33 verglichen und bei Übereinstimmung mit Hilfe einer Zugriffseinheit 35 der FMMU-Einheit 33 dann die entsprechenden Daten aus dem Kommunikationstelegramm ausgelesen bzw. in dieses eingegeben.

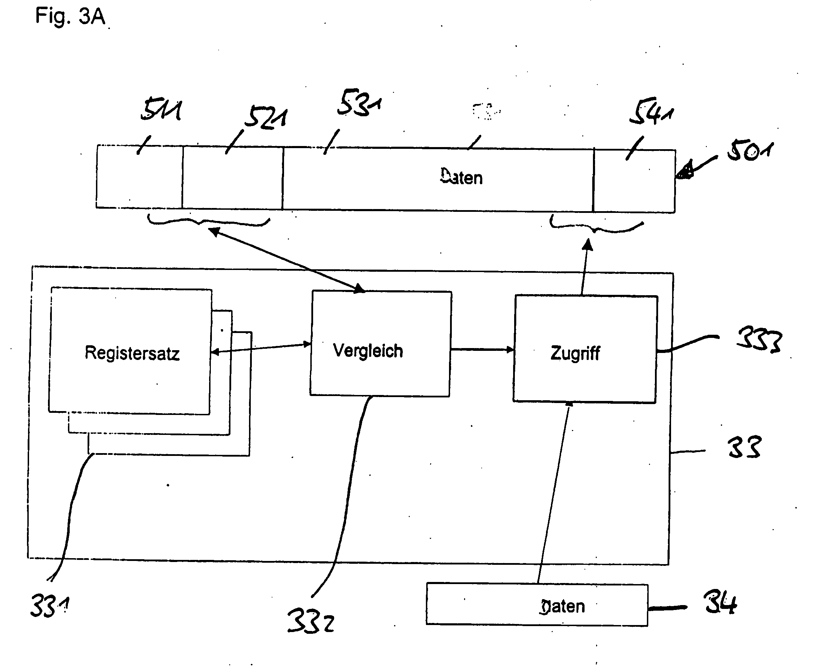

Figur 3A zeigt den Verarbeitungsablauf in der FMMU-Einheit 33 eines Knotens 3 beim Empfang eines Read-Telegramms. Die Kopfteile 511, 521 des auf der Übergangsstrecke 2 zirkulierenden Kommunikationstelegramms 501 werden in der FMMU-Einheit 33 mit den eingespeicherten Registerdatensätzen 331 verglichen. Falls dieser Vergleich zeigt, dass der Datenteil 531 des Kommunikationstelegramms Bereiche enthält, die dem Knoten zuzuordnen sind, werden diese Datenbereiche aus dem Datenspeicher 34 des Knotens ausgelesen und in das Kommunikationstelegramm 501 unter Neuberechnung der Checksumme 541 auf der Übertragungsstrecke 2 eingegeben.

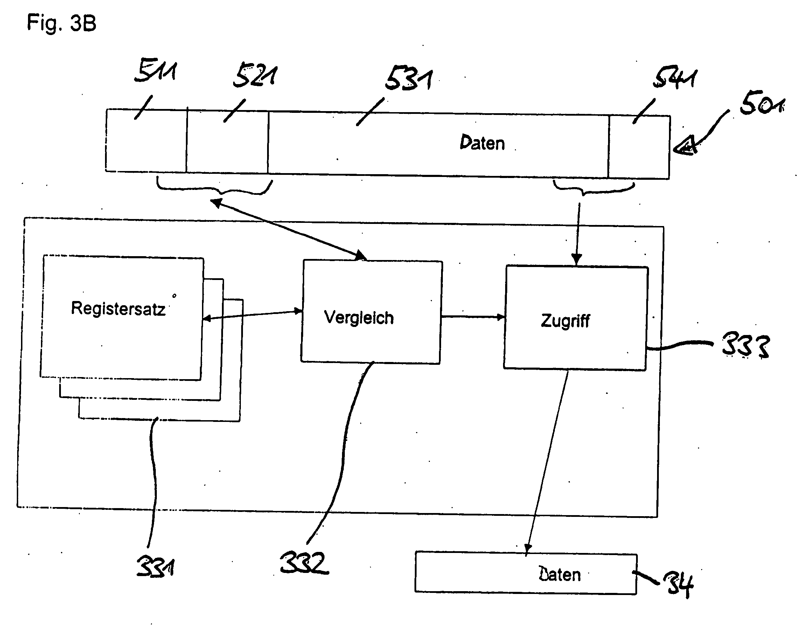

Figur 3B zeigt den Verarbeitungsablauf in der FMMU-Einheit 33 eines Knotens 3 beim Empfang eines Write-Telegramms. Hierbei werden wiederum die Kopfteile 511, 521 des Kommunikationstelegramms 501 auf der Übergangsstrecke 2 mit den Registerdatensätzen 331 verglichen. Wenn eine Übereinstimmung festgestellt wird und im Registerdatensatz angezeigt ist, das ein Schreibvorgang vorgenommen werden soll, werden die entsprechenden Daten 531 aus dem Kommunikationstelegramm 501 ausgelesen und in den Datenspeicher 34 des Knotens eingespeichert.

Mit der vorstehend dargestellten Vorgehensweise besteht auf einfache Weise die Möglichkeit der Datenkommunikation zwischen beliebig nacheinander an der Übertragungsstrecke 2 angeordneten Knoten durchzuführen, indem der vorausgehende Knoten beim Durchlauf Daten in das Kommunikationstelegramm für den nachgeordneten Knoten einschreibt. Um schnelle Steuerungsvorgänge, insbesondere Schaltvorgänge mit den in den Subzyklen des Sendezyklus übertragenen Kommunikationstelegrammen auszulösen, enthält der Datenbereich des Kommunikationstelegramms vorzugsweise jeweils ein Steuerdatum, dass von einem vorausgehenden Knoten beim Durchlauf des Kommunikationstelegramms vorzugsweise in der anhand Fig. 3A dargestellten Weise einschreiben wird. Ein nachgeordneter Knoten, der den Steuervorgang ausführen soll, liest dann das Steuerdatum, vorzugsweise entsprechend der in Fig. 3B dargestellten Weise aus und vergleicht es mit einem im Datenspeicher abgelegten Datum, um bei Eintritt eines bestimmten Vergleichsergebnisses, z.B. das Steuerdatum ist größer als das abgelegte Datum, einen Steuervorgang z.B. die Anwendung des Steuerdatums als neue Regelgröße aufzuführen. Mit dieser Vorgehensweise lassen sich auf einfache Weise mithilfe der Inter-Knoten-Kommunikation schnelle Regelungsvorgänge, wie sie z.B. in der Kunststoffindustrie erforderlich sind, durchzuführen.

Die Erfindung wurde anhand des Ethernet-Protokolls erläutert, es besteht jedoch die Möglichkeit auch andere Netzwerkprotokolle in der erfindungsgemäßen Weise weiterzugestalten, um eine schnelle Inter-Knoten-Kommunikation entlang einer Übertragungsstrecke zu ermöglichen.

## Patentansprüche

1. Verfahren zum Übertragen von Daten auf einer Übertragungsstrecke (2), an der eine Steuereinheit (1) und mehrere Knoten (3) angeschlossen sind,
wobei die Steuereinheit (1) zyklisch Daten in Form von Telegrammen (5) auf die Übertragungstrecke (2) ausgibt, den Sendezyklus in eine Anzahl von gleichlangen Subzyklen unterteilt und den Sendevorgang steuert, um während der gesamten Sendezykluszeit unter Beachtung der Übertragungsnorm kontinuierlich Telegramme auszugeben,
wobei die Knoten (3) beim Durchlauf Daten mit den Telegrammen austauschen,
und wobei von der Steuereinheit in jedem Subzyklus mindestens ein Kommunikationstelegramm (501) versandt wird, in das ein erster Knoten beim Durchlauf Daten für einen zweiten an der Übertragungsstrecke nachgeordneten Knoten einschreiben kann, **dadurch gekennzeichnet,**
**dass** in dem ersten Knoten ein erster Registerdatensatz erzeugt wird, der eine Kennung eines Datenbereichs in dem auf der Übertragungsstrecke übertragenen Kommunikationstelegramm, eine Kennung eines zugeordneten Speicherbereichs im ersten Knoten und einen Schreibbefehl enthält, und dass in dem zweiten Knoten ein zweiter Registerdatensatz erzeugt wird, der die Kennung des Datenbereichs in dem auf der Übertragungsstrecke übertragenen Kommunikationstelegramm, eine Kennung eines zugeordneten Speicherbereichs in dem zweiten Knoten und einen Lesebefehl enthält, wobei der erste Knoten und der zweite Knoten jeweils einen Vergleich der auf der Übertragungsstrecke durchlaufenden Telegramme mit dem zugehörigen Registerdatensatz ausführen und auf der Grundlage des Vergleichsergebnisses eine Datenübergabe zwischen dem ersten Knoten und dem zweiten Knoten über das von der Steuereinheit versandte Kommunikationstelegramm stattfindet.

2. Verfahren nach Anspruch 1, **dadurch gekennzeichnet, dass** das Kommunikationstelegramm (501) von der Steuereinheit (1) zu einem festen Zeitpunkt im Subzyklus verschickt wird.

3. Verfahren nach Anspruch 1 oder 2, **dadurch gekennzeichnet, dass** zum kontinuierlichen Versenden der Telegramme bei einer vorgegebenen Sendezykluszeit die Anzahl und/oder die Länge der in einem Subzyklus zu versendenden Telegramme (5) einschließlich des mindestens einen Kommunikationstelegramms (501) von der Steuereinheit (1) angepasst wird, um während der gesamten vorgebenen Sendezykluszeit kontinuierlich Telegramme auf die Übertragungsstrecke (2) auszugeben.

4. Verfahren nach einem der Ansprüche 1 bis 3, **dadurch gekennzeichnet, dass** der Registerdatensatz eine Startadresse der Daten im Kommunikationstelegramm, eine Endadresse der Daten oder eine Länge eines Datenbereichs im Kommunikationstelegramm, eine Startadresse der zugeordneten Daten in dem Knoten und einen Kennzeichnung der Datenübertragung als Schreib- bzw. Lesevorgang enthält.

5. Verfahren nach einem der Ansprüche 1 bis 4, **dadurch gekennzeichnet, dass** der Registerdatensatz in dem Knoten während einer Hochlaufphase erzeugt wird.

6. Verfahren nach einem der Ansprüche 1 bis 5, **dadurch gekennzeichnet, dass** der Datenbereich in dem Kommunikationstelegramm ein Steuerdatum enthält, das vom ersten Knoten beim Durchlauf des Kommunikationstelegramms eingeschrieben wird, wobei der zweite an der Übertragungsstrecke nachgeordnete Knoten das Steuerdatum ausliest und mit einem vorgebenen Datum vergleicht, um bei Eintritt eines bestimmten Vergleichergebnisses einen Steuervorgang auszuführen.

7. Verfahren nach einem der Ansprüche 1 bis 6, **dadurch gekennzeichnet, dass** die Daten in Form von Ethernet-Telegrammen übertragen werden.

8. Verfahren nach einem der Ansprüche 1 bis 7, **dadurch gekennzeichnet, dass** der erste Knoten Daten für eine Steueraufgabe des zweiten Knotens in das in jedem Subzyklus versandte mindestens eine Kommunikationstelegramm (501) einschreibt.

9. Kommunikationsnetzwerk mit einer Übertragungsstrecke, an der eine Steuereinheit (1) und mehrere Knoten (3) angeschlossen sind,
wobei die Steuereinheit (1) zyklisch Daten in Form von Telegrammen (5) auf die Übertragungstrecke (2) ausgibt, den Sendezyklus in eine Anzahl von gleichlangen Subzyklen unterteilt und den Sendevorgang steuert, um während der gesamten Sendezykluszeit unter Beachtung der Übertragungsnorm kontinuierlich Telegramme auszugeben, und
wobei die Knoten (3) beim Durchlauf Daten mit den Telegrammen austauschen,
die Steuereinheit (1) in jedem Subzyklus mindestens ein Kommunikationstelegramm (501) versendet, in das ein erster Knoten beim Durchlauf Daten für einen zweiten an der Übertragungsstrecke nachgeordneten Knoten einschreiben kann, **dadurch gekennzeichnet,**
**dass** im ersten Knoten ein erster Registerdatensatz vorliegt, der eine Kennung eines Datenbereichs in dem auf der Übertragungsstrecke übertragenen Kommunikationstelegramm, eine Kennung eines zugeordneten Speicherbereichs in dem ersten Knoten und einen Schreibbefehl enthält, und im zweiten Knoten ein zweiter Registerdatensatz vorliegt, der die Kennung des Datenbereichs in dem auf der Übertragungsstrecke übertragenen Kommunikationstelegramm, eine Kennung eines zugeordneten Speicherbereichs in dem zweiten Knoten und einen Lesebefehl enthält, wobei der erste Knoten und der zweite Knoten jeweils einen Vergleich der auf der Übertragungsstrecke durchlaufenden Telegramme mit den zugehörigen Registerdatensatz ausführen und auf der Grundlage des Vergleichsergebnisses eine Datenübergabe stattfindet.

10. Kommunikationsnetzwerk nach Anspruch 9, **dadurch gekennzeichnet, dass** die Steuereinheit (1) das Kommunikationstelegramm (501) zu einem festen Zeitpunkt im Subzyklus verschickt.

11. Kommunikationsnetzwerk nach Anspruch 9 oder 10, **dadurch gekennzeichnet, dass** die Steuereinheit (1) zum kontinuierlichen Versenden der Telegramme bei einer vorgegebenen Sendezykluszeit die Anzahl und/oder die Länge der in einem Subzyklus zu versendenden Telegramme (5) einschließlich des mindestens einen Kommunikationstelegramms (501) anpasst, um während der gesamten vorgebenen Sendezykluszeit kontinuierlich Telegramme auf die Übertragungsstrecke (2) auszugeben.

12. Kommunikationsnetzwerk nach einem der Ansprüche 9 bis 11, **dadurch gekennzeichnet, dass** der Registerdatensatz eine Startadresse der Daten im Kommunikationstelegramm, eine Endadresse der Daten oder eine Länge eines Datenbereichs im Kommunikationstelegramm, eine Startadresse der zugeordneten Daten in dem Knoten und einen Kennzeichnung der Datenübertragung als Schreib- bzw. Lesevorgang enthält.

13. Kommunikationsnetzwerk nach einem der Ansprüche 9 bis 12, **dadurch gekennzeichnet, dass** der Registerdatensatz in den Knoten während einer Hochlaufphase erzeugt wird.

14. Kommunikationsnetzwerk nach einem der Ansprüche 9 bis 13, **dadurch gekennzeichnet, dass** der Datenbereich in dem Kommunikationstelegramm ein Steuerdatum enthält, das der erste Knoten beim Durchlauf des Kommunikationstelegramms einschreibt, wobei der zweite an der Übertragungsstrecke nachgeordnete Knoten das Steuerdatum ausliest und mit einem vorgebenen Datum vergleicht, um bei Eintritt eines bestimmten Vergleichergebnisses einen Steuervorgang auszuführen.

15. Kommunikationsnetzwerk nach einem der Ansprüche 9 bis 14, **dadurch gekennzeichnet, dass** die Daten in Form von Ethernet-Telegrammen übertragen werden.

16. Kommunikationsnetzwerk nach einem der Ansprüche 9 bis 15, **dadurch gekennzeichnet, dass** der erste Knoten Daten für eine Steueraufgabe des zweiten Knotens in das in jedem Subzyklus versandte mindestens eine Kommunikationstelegramm (501) einschreibt.

## Claims

1. A method for transmitting data on a transmission path (2) to which a control unit (1) and several nodes (3) are connected,
the control unit (1) cyclically outputting data in the form of telegrams (5) onto the transmission path (2), subdividing the transmission cycle into a number of subcycles having the same length and controlling the transmission process in order to continuously output telegrams during the entire transmission cycle time taking the transmission standard into account,
the nodes (3) exchanging data with the telegrams when passing through,
and at least one communication telegram (501) into which a first node during pass-through may enter data for a second node which is located downstream on the transmission path being transmitted by the control unit in each sub-cycle
**characterized in that**
a first register data set is generated in the first node, the first register data set containing an identification of a data area in the communication telegram transmitted on the transmission path, an identification of an associated storage area in the first node and a write command and that in the second node, a second register data set is generated which contains the identification of the data area in the communication telegram transmitted on the communication path, an identification of an associated storage area in the second node and a read command, the first node and the second node respectively carrying out a comparison of the telegrams passing through the transmission path with the associated register data set and a data transfer taking place between the first node and the second node via the communication telegram transmitted by the control unit on the basis of the comparison result.

2. The method of claim 1, **characterized in that** the communication telegram (501) is transmitted by the control unit (1) at a fixed point in time in the subcycle.

3. The method of claim 1 or 2, **characterized in that** for continuous transmission of the telegrams at a predetermined transmission cycle time the number and/or the length of the telegrams (5) to be sent in a sub-cycle including the at least one communication telegram (501) is/are adjusted by the control unit (1) in order to continuously output telegrams to the transmission path (2) during the entire predetermined transmission cycle time.

4. The method of any one of claims 1 to 3, **characterized in that** the register data set contains a start address of the data in the communication telegram, an end address of the data or a length of a data area in the communication telegram, a start address of the associated data in the node and an identification of the data transmission as write or, respectively, read operation.

5. The method of any one of claims 1 to 4, **characterized in that** the register data set is generated within the node during a start-up period.

6. The method according to any one of claims 1 to 5, **characterized in that** the data area in the communication telegram contains a control date which is entered by the first node during the pass-through of the communication telegram, wherein the second node which is located downstream on the transmission path reads out the control date and compares it with a predetermined date in order to carry out a control operation if a particular comparison result occurs.

7. The method of any one of claims 1 to 6, **characterized in that** the data are transmitted in the form of Ethernet telegrams.

8. The method of any one of claims 1 to 7, **characterized in that** the first node enters data for a control operation of the second node into the at least one communication telegram (501) transmitted in each sub-cycle.

9. A communication network comprising a transmission path to which a control unit (1) and several nodes (3) are connected,
the control unit (1) cyclically outputting data in the form of telegrams (5) to the transmission path (2), subdividing the transmission cycle into a number of subcycles having the same length and controlling the transmission process in order to continuously output telegrams during the entire transmission cycle time taking the transmission standard into account, and
the nodes (3) exchanging data with the telegrams when passing through,
the control unit (1) in each sub-cycle transmitting at least one communication telegram (501) into which a first node during pass-through may enter data for a second node which is located downstream on the transmission path,
**characterized in that**
in the first node a first register data set is present which contains an identification of a data area in the communication telegram transmitted on the transmission path, an identification of an associated storage area in the first node and a write command, and that in the second node a second register data set is present which contains the identification of the data area in the communication telegram transmitted on the transmission path, an identification of an associated storage area in the second node and a read command, the first node and the second node respectively carrying out a comparison of the telegrams passing through the transmission path with the associated register data set and a data transfer taking place on the basis of the comparison result.

10. The communication network of claim 9, **characterized in that** the control unit (1) transmits the communication telegram (501) at a fixed point in time in the subcycle.

11. The communication network of claim 9 or 10, **characterized in that** for continuous transmission of the telegrams at a predetermined transmission cycle time, the control unit (1) adjusts the number and/or the length of the telegrams (5) to be transmitted within a sub-cycle including the at least one communication telegram (501) in order to continuously output telegrams to the transmission path (2) during the entire predetermined transmission cycle time.

12. The communication network of any one of claims 9 to 11, **characterized in that** the register data set contains a start address of the data in the communication telegram, an end address of the data or a length of a data area in the communication telegram, a start address of the data associated in the node and an identification of the data transmission as write or, respectively, read operation.

13. The communication network of any one of claims 9 to 12, **characterized in that** the register data set in the nodes is generated during a start-up period.

14. The communication network of any one of claims 9 to 13, **characterized in that** the data area in the communication telegram comprises a control date which the first node enters during the pass-through of the communication telegram, wherein the second node located downstream on the transmission path reads out the control date and compares it with a predetermined date in order to carry out a control operation if a particular comparison result occurs.

15. The communication network of any one of claims 9 to 14, **characterized in that** the data are transmitted in the form of Ethernet telegrams.

16. The communication network of any one of claims 9 to 15, **characterized in that** the first node enters data for a control operation of the second node into the at least one communication telegram (501) transmitted in each sub-cycle.

## Revendications

1. Procédé de transmission de données sur une liaison de transmission (2) à laquelle sont raccordés une unité de commande (1) et plusieurs noeuds (3), l'unité de commande (1) délivrant de manière cyclique des données sous la forme de télégrammes (5) sur la liaison de transmission (2), divisant le cycle d'émission en un certain nombre de sous-cycles de même longueur et commandant l'opération d'émission en vue de délivrer continuellement des télégrammes pendant toute la durée du cycle d'émission en respectant la norme de transmission,
les noeuds (3) échangeant des données avec les télégrammes lors de leur passage,
et au moins un télégramme de communication (501) étant envoyé par l'unité de commande dans chaque sous-cycle, dans lequel un premier noeud, lors du passage, peut écrire des données pour un deuxième noeud disposé à la suite sur la ligne de transmission,
**caractérisé en ce**
**qu'**un premier jeu de données de registre est généré dans le premier noeud, lequel contient un identifiant d'une plage de données dans le télégramme de communication transmis sur la ligne de transmission, un identifiant d'une zone de mémoire associée dans le premier noeud et une instruction d'écriture, et en ce qu'un deuxième jeu de données de registre est généré dans le deuxième noeud, lequel contient l'identifiant de la plage de données dans le télégramme de communication transmis sur la ligne de transmission, un identifiant d'une zone de mémoire associée dans le deuxième noeud et une instruction de lecture, le premier noeud et le deuxième noeud effectuant respectivement une comparaison des télégrammes qui parcourent la liaison de transmission avec le jeu de données de registre associé et un transfert de données entre le premier noeud et le deuxième noeud par le biais du télégramme de communication envoyé par l'unité de commande ayant lieu sur la base du résultat de la comparaison.

2. Procédé selon la revendication 1, **caractérisé en ce que** le télégramme de communication (501) est envoyé par l'unité de commande (1) à un instant fixe dans le sous-cycle.

3. Procédé selon la revendication 1 ou 2, **caractérisé en ce que** pour un envoi en continu des télégrammes avec une durée prédéfinie du cycle d'émission, le nombre et/ou la longueur des télégrammes (5) à envoyer dans un sous-cycle ainsi que l'au moins un télégramme de communication (501) est adapté par l'unité de commande (1) afin d'indiquer continuellement des télégrammes sur la ligne de transmission (2) pendant toute la durée prédéfinie du cycle d'émission.

4. Procédé selon l'une des revendications 1 à 3, **caractérisé en ce que** le jeu de données de registre contient une adresse de début des données dans le télégramme de communication, une adresse de fin des données ou une longueur d'une plage de données dans le télégramme de communication, une adresse de début des données associées dans le noeud et un identifiant de la transmission de données en tant qu'opération d'écriture ou de lecture.

5. Procédé selon l'une des revendications 1 à 4, **caractérisé en ce que** le jeu de données de registre dans le noeud est généré pendant une phase de démarrage.

6. Procédé selon l'une des revendications 1 à 5, **caractérisé en ce que** la plage de données dans le télégramme de communication contient une date de commande qui est écrite par le premier noeud lors du passage du télégramme de communication, le deuxième noeud disposé à la suite sur la ligne de transmission lisant la date de commande et la comparant avec une date prédéfinie pour, en présence d'un résultat donné de la comparaison, exécuter une opération de commande.

7. Procédé selon l'une des revendications 1 à 6, **caractérisé en ce que** les données sont transmises sous la forme de télégrammes Ethernet.

8. Procédé selon l'une des revendications 1 à 7, **caractérisé en ce que** le premier noeud écrit dans l'au moins un télégramme de communication (501) envoyé dans chaque sous-cycle des données pour une tâche de commande du deuxième noeud.

9. Réseau de communication comprenant une liaison de transmission à laquelle sont raccordés une unité de commande (1) et plusieurs noeuds (3),
l'unité de commande (1) délivrant de manière cyclique des données sous la forme de télégrammes (5) sur la liaison de transmission (2), divisant le cycle d'émission en un certain nombre de sous-cycles de même longueur et commandant l'opération d'émission en vue de délivrer continuellement des télégrammes pendant toute la durée du cycle d'émission en respectant la norme de transmission,
les noeuds (3) échangeant des données avec les télégrammes lors de leur passage,
l'unité de commande (1) envoyant au moins un télégramme de communication (501) dans chaque sous-cycle, dans lequel un premier noeud, lors du passage, peut écrire des données pour un deuxième noeud disposé à la suite sur la ligne de transmission,
**caractérisé en ce**
**qu'**il existe dans le premier noeud un premier jeu de données de registre, lequel contient un identifiant d'une plage de données dans le télégramme de communication transmis sur la ligne de transmission, un identifiant d'une zone de mémoire associée dans le premier noeud et une instruction d'écriture, et il existe dans le deuxième noeud un deuxième jeu de données de registre, lequel contient l'identifiant de la plage de données dans le télégramme de communication transmis sur la ligne de transmission, un identifiant d'une zone de mémoire associée dans le deuxième noeud et une instruction de lecture, le premier noeud et le deuxième noeud effectuant respectivement une comparaison des télégrammes qui parcourent la liaison de transmission avec le jeu de données de registre associé et un transfert de données ayant lieu sur la base du résultat de la comparaison.

10. Réseau de communication selon la revendication 9, **caractérisé en ce que** l'unité de commande (1) envoie le télégramme de communication (501) à un instant fixe dans le sous-cycle.

11. Réseau de communication selon la revendication 9 ou 10, **caractérisé en ce que** l'unité de commande (1), pour un envoi en continu des télégrammes avec une durée prédéfinie du cycle d'émission, adapte le nombre et/ou la longueur des télégrammes (5) à envoyer dans un sous-cycle ainsi que l'au moins un télégramme de communication (501) afin d'indiquer continuellement des télégrammes sur la ligne de transmission (2) pendant toute la durée prédéfinie du cycle d'émission.

12. Réseau de communication selon l'une des revendications 9 à 11, **caractérisé en ce que** le jeu de données de registre contient une adresse de début des données dans le télégramme de communication, une adresse de fin des données ou une longueur d'une plage de données dans le télégramme de communication, une adresse de début des données associées dans le noeud et un identifiant de la transmission de données en tant qu'opération d'écriture ou de lecture.

13. Réseau de communication selon l'une des revendications 9 à 12, **caractérisé en ce que** le jeu de données de registre dans le noeud est généré pendant une phase de démarrage.

14. Réseau de communication selon l'une des revendications 9 à 13, **caractérisé en ce que** la plage de données dans le télégramme de communication contient une date de commande qui est écrite par le premier noeud lors du passage du télégramme de communication, le deuxième noeud disposé à la suite sur la ligne de transmission lisant la date de commande et la comparant avec une date prédéfinie pour, en présence d'un résultat donné de la comparaison, exécuter une opération de commande.

15. Réseau de communication selon l'une des revendications 9 à 14, **caractérisé en ce que** les données sont transmises sous la forme de télégrammes Ethernet.

16. Réseau de communication selon l'une des revendications 9 à 15, **caractérisé en ce que** le premier noeud écrit dans l'au moins un télégramme de communication (501) envoyé dans chaque sous-cycle des données pour une tâche de commande du deuxième noeud.
